# EUROPÄISCHE PATENTSCHRIFT

(11) **EP 1 156 386 B1**
(45) Veröffentlichungstag und Bekanntmachung des Hinweises auf die Patenterteilung: **16.04.2008**
(21) Anmeldenummer: 01111315.6
(22) Anmeldetag: 09.05.2001
(51) Int. Cl.: G03G 15/01

(54) **Vorrichtung zur Minimierung des Einflusses von Registerdifferenzen**
Apparatus for minimizing the influence of registration differences
Dispositif pour minimiser l'influence des différences de registration

(30) Priorität: 17.05.2000 US 204854 P
(43) Veröffentlichungstag der Anmeldung: 21.11.2001
(73) Patentinhaber: Eastman Kodak Company, Rochester, New York 14650 (US)
(72) Erfinder: Liston, Christopher, Rochester,NY 146 18 (US); Metzler, Patrick, Dr., 24214 Gettorf (DE); Petersen, Ralph, 24147 Kiel (DE); Peter, Karlheinz, Dr., 24113 Molfsee (DE); Dreher, Ingo, 24103 Kiel (DE)
(74) Vertreter: Weber, Etienne Nicolas

(56) Entgegenhaltungen:
- EP-A- 0 600 674
- US-A- 4 264 957
- US-A- 5 600 404
- PATENT ABSTRACTS OF JAPAN Bd. 1999, Nr. 11, 30. September 1999 (1999-09-30) & JP 11 157123 A (CANON INC), 15. Juni 1999 (1999-06-15)

## Beschreibung

Die Erfindung betrifft ein Verfahren zur Minimierung des Einflusses von Registerdifferenzen beim Mehrfarbendruck, insbesondere bei digitalen Druckverfahren, wobei Registerwerte in Transportrichtung, die quer zu dieser Richtung unterschiedlich sind, auf einen zwischen den Extremen liegenden Wert eingestellt werden.

Beim Mehrfarbendruck werden farbige Darstellungen dadurch hergestellt, daß Teilfarbenbilder übereinander gedruckt werden. In der Regel handelt es sich dabei um vier Grundfarben. Das Register ist die gegenseitige Positionierung dieser Teilfarbenbilder. Registerfehler verschlechtern die Druckqualität und müssen vermieden werden. Diese Fehler lassen sich nicht immer völlig korrigieren, insbesondere wenn es sich um einen bogenförmigen, wellenförmigen oder unregelmäßigen sich quer zur Transportrichtung erstreckenden Registerversatz handelt. Beispielsweise kommt es beim Mehrfarbendruckmaschinen, bei denen die Teilfarbenbilder als elektrostatische latente Bilder oder bei Ink-Jet oder ähnlichen Schreibköpfen ebenfalls in digitaler Weise auf einem Bildzylinder erzeugt werden, zu einer Krümmung der aufgetragenen Bildpunktzeilen. Diese Krümmung ist, da von der Geraden abweichend, ein derartiger nicht völlig korrigierbarer Registerfehler.

Aus der US5600404 ist ein Verfahren bekannt wobei Muster zur Erfassung eines Versatzes in der Richtung quer zur Transportrichtung und Muster zur Erfassung eines Versatzes in Transportrichtung geformt werden. Der mittlere Wert des Versatzes wird pro Bereich entlang des Übertragungsbandes gemessen.

Aus der DE 693 19 308 T2 ist ein Verfahren der eingangs genannten Art bekannt, bei dem der Einfluß derartiger Fehler dadurch eliminiert wird, daß die Registermarken näher als die Bildbreite aneinandergesetzt werden. Auf diese Weise ist es möglich, die

Registerdifferenzen zwischen zwei Druckwerken zu verringern, wenn die Registerabweichungen, z. B. in Form von zwei in verschiedene Richtungen gekrümmte Bögen auftreten. Das Problem dieser technischen Lösung besteht jedoch darin, daß je nach Form der Registerabweichungen eine derartige Verringerung der Registerdifferenzen nicht erreicht wird oder gar eine Verschlechterung eintritt.

Der Erfindung liegt daher die Aufgabe zugrunde, ein Verfahren der eingangs genannten Art derart auszugestalten, daß der Einfluß von Registerdifferenzen auf die Bildqualität zuverlässig und in hohem Maße minimiert werden kann.

Bezüglich des Verfahrens wird die Aufgabe durch die Merkmale des Anspruchs1 gelöst.

Durch die Erfindung werden durch unmittelbare oder vorherige Erfassung viele Einzelwerte des Registers in Transportrichtung erfaßt, wobei die erfaßten Werte über die Breite des Drucksubstrats quer zur Transportrichtung verteilt sind. Dabei muß die Anzahl der Werte derart gewählt sein, daß dies für eine ausreichend exakte Bestimmung eines Mittelwerts ausreicht. Aus diesen Werten kann nach verschiedenen Methoden ein Mittelwert bestimmt und zur Grundlage für die Registersteuerung gemacht werden.

Der Vorteil der Erfindung liegt darin, daß der Einfluß von Registerdifferenzen unabhängig davon minimierbar ist, welche Form diese Registerdifferenzen quer zur Transportrichtung aufweisen. Die Werte des Registers können also über die Drucksubstratbreite gesehen eine Bogenform bilden, wellenförmig oder völlig unregelmäßig verlaufen. Durch die Erfindung läßt sich unabhängig von diesen Formen für jedes Teilfarbenbild immer ein optimaler mittlerer Wert bestimmen, wobei diese Werte für die Erzielung einer optimalen Registerübereinstimmung für alle Farbdruckwerke in Übereinstimmung gebracht werden. Dabei ist es möglich, die Registerwerte auf verschiedene Weise zu ermitteln und die mittleren Werte auf verschiedene Weise zu berechnen.

So sieht eine Weiterbildung des Verfahrens vor, daß die Registerwerte an mehreren Stellen quer zur Transportrichtung gemessen werden. Ein anderer Vorschlag besteht darin, daß der Verlauf einer Bildpunktzeile erfaßt und die Daten abgespeichert werden, daß die Registerwerte quer zur Transportrichtung an mindestens einer Stelle gemessen werden und daß aus den Daten und der mindestens einen Messung der Verlauf der Bildpunktzeile ermittelt und der mittlere Wert berechnet wird. Die Vorschläge sind universell einsetzbar, sowohl bei elektrostatischen als auch bei andren digitalen Druckverfahren. Bei vielen digitalen, beispielsweise elektrostatischen Druckverfahren werden die Bilder durch Schreibköpfe auf Trägern, das sind in der Regel Bildzylinder, erzeugt, dann mit Toner versehen und auf das Substrat gedruckt. Bei einer derartigen Erzeugung von Bildpunktzeilen durch Schreibköpfe kommt es zu Abweichungen von einer Geraden. Derartige Abweichungen sind maschinenspezifische Daten für den jeweiligen Schreibkopf, die bei jedem Druck ungefähr in gleicher Weise auftreten. Sie können also einmal erfaßt und abgespeichert werden, so daß die Lage einer derartigen abgespeicherten Kurve für den aktuellen Fall mittels eines oder zweier gemessener Punkte festgelegt werden kann. Diese Methode hat den Vorteil, daß eine exakte Mittelwertbestimmung des Registers in der Einstellphase mittels nur einer oder zweier Messungen vornehmbar ist. Dadurch wird der Meßaufwand verringert, wobei der Mittelwert trotzdem aus einer Vielzahl von Daten gebildet werden kann.

Die Bestimmung des Mittelwerts ist auf verschiedene Art und Weise möglich. Es kann sich dabei um eine reine Berechnung des durchschnittlichen Registers handeln, oder es ist möglich, daß zur Berechnung eines mittleren Wertes die ermittelten Abweichungen gewichtet werden. Auch bei einer solchen Gewichtung gibt es die unterschiedlichsten Berechnungsmethoden, ein Vorschlag besteht in einer quadratischen Gewichtung. Der Erfolg einer solchen Gewichtung besteht darin, daß der mittlere Wert derart zwischen die oberen und unteren Werten gelegt wird, daß möglichst keine der Abweichungen im Bild sichtbar ist. Durch eine quadratische Gewichtung kann ein mittlerer Wert einem weiter ab liegenden Registerwert angenähert werden, um den Fehler in diesem Bereich so zu minimieren, daß er nicht im Bild sichtbar wird. Dies könnte außer der quadratischen Gewichtung auch dadurch vorgenommen werden, daß als mittlerer Wert die Mitte zwischen dem niedrigsten und dem höchsten Wert genommen wird. Umgekehrt ist es jedoch auch möglich, daß in die Bestimmung des mittleren Wertes die niedrigsten und höchsten Werte nicht miteinbezogen werden. Die letztere Methode nimmt in Kauf, daß einzelne "Ausreißer" sichtbar sind, diese jedoch die Bildung eines mittleren Wertes nicht derart beeinflussen können, daß ein Registerfehler über die gesamte Bildfläche sichtbar wird. Die Möglichkeiten verschiedener Mittelwertbildungen sind bei der Erfindung nicht festgelegt, weitere Arten sind denkbar. Die Art der Mittelwertbildung kann beispielsweise je nach Bildinhalt und Blattformat gewählt werden.

Eine vorteilhafte Ausgestaltung des Verfahrens sieht vor, daß die mittleren Werte aller Farbdruckwerke zu dem mittleren Wert eines Referenzdruckwerks in Übereinstimmung gebracht werden. Damit bildet der mittlere Wert des Referenzdruckwerks, den Maßstab zur Ausrichtung der Register der anderen Farbdruckwerke.

Auch die Werte des Registers lassen sich auf verschiedene Weise ermitteln. Eine Vermessung ganzer Bildpunktzeilen ist möglich, oder es kann vorgesehen sein, daß die Registerwerte durch die Messung mindestens zweier quer zur Transportrichtung beabstandet angeordneter Registermarken ermittelt werden. Dabei wird die Bestimmung eines Mittelwerts natürlich um so genauer, je mehr Meßwerte zur Verfügung stehen. Die Vermessung einer quer zur Transportrichtung verlaufenden Zeile von Registermarken ist also sinnvoll, es sei denn, die Daten des Verlaufs der Bildpunktzeile eines Schreibkopfes ist bereits hinterlegt und es ist nur noch erforderlich, diese Daten in die richtige Lage einzuordnen.

Die Registermarken können auf einem Träger für Drucksubstrate gedruckt und danach wieder entfernt werden. Dies hat den Vorteil, daß vor der Bedruckung eines Substrats eine genaue Einstellung vorgenommen werden kann. Die Registermarken können jedoch auch auf ein auf dem Träger für Drucksubstrate liegendes Substrat gedruckt werden. Es kann sich dabei um ein Probesubstrat handeln oder es ist auch möglich, derartige Registermarken auf einen bildfreien Rand eines Drucksubstrats zu drucken und auf der Grundlage der Erfassung dieser Registermarken eine Korrektur durch eine Regelung während des Drucks vorzusehen. Bei digitalen Druckverfahren kann eine derartige Korrektur zwischen der Vornahme jedes einzelnen Drucks stattfinden.

Ein Rechner ist derart ausgebildet daß er die mittleren Werte aller Farbdruckwerke mit dem mittleren Wert eines Referenzdruckwerks in Übereinstimmung bringt.

Für die Erlangung der Registerwerte kann vorgesehen sein, daß der mindestens eine Sensor für die Erfassung einer Vielzahl von Meßstellen quer zur Transportrichtung ausgebildet ist oder daß eine Vielzahl von Sensoren quer zur Transportrichtung angeordnet sind.

Ein Sensor ist quer zur Transportrichtung angeordnet der alle Teilfarbendrucke erfassen kann und daß der Rechner mit Daten über den Verlauf einer Bildpunktzeile mindestens eines Schreibkopfes geladen ist und die mittleren Werte aus den Messungen der Sensoren und den Daten ermittelt. Zwei Sensoren sind erforderlich, wenn der Winkel des Schreibkopfes quer zur Transportrichtung oder von Elementen zwischen Schreibkopf und Substrat nicht bekannt ist oder Änderungen unterworfen ist. Die Daten können als maschinenspezifische Nennwerte mindestens eines, vorzugsweise jedoch aller Schreibköpfe hinterlegt sein. Dabei können sie vom Hersteller der Schreibköpfe mitgeliefert oder nach dem Einbau erfaßt und festgehalten werden. Es ist jedoch auch möglich, daß Sensoren zur Ermittlung der Daten angeordnet sind. Dann können diese Daten ständig aktualisiert werden, was den Vorteil hat, daß Veränderungen, z. B. durch Temperaturänderungen, berücksichtigt werden.

Für die Messung können Registermarken erfaßt werden. Dazu ist mindestens ein Sensor zur Erfassung von mindestens zwei quer zur Transportrichtung beabstandet angeordneten Registermarken vorgesehen. Die Anzahl der Sensoren richtet sich wiederum danach, ob bereits Daten für die Schreibköpfe vorhanden sind, oder ob eine genaue Erfassung aller Meßwerte entlang einer quer zur Transportrichtung liegenden Linie erforderlich ist.

Sowohl die Anordnung der Sensoren als auch die Ausbildung des Rechners kann verschiedene Variationen aufweisen, wobei die Ausgestaltungen dahingehen können, daß sämtliche der vorgenannten Verfahrensschritte und Variationen des Verfahrens ausführbar sind.

Die Erfindung wird nachfolgend anhand der Zeichnung erläutert. Es zeigen
- **Fig. 1**: eine Bestimmung eines mittleren Werts eines Registers,
- **Fig. 2**: eine Prinzipdarstellung einer Druckmaschine,
- **Fig. 3a bis 3d**: ein Verfahren nach dem Stand der Technik und
- **Fig. 4**: verschiedene Arten von Bestimmungen eines mittleren Werts eines Registers nach der Erfindung.

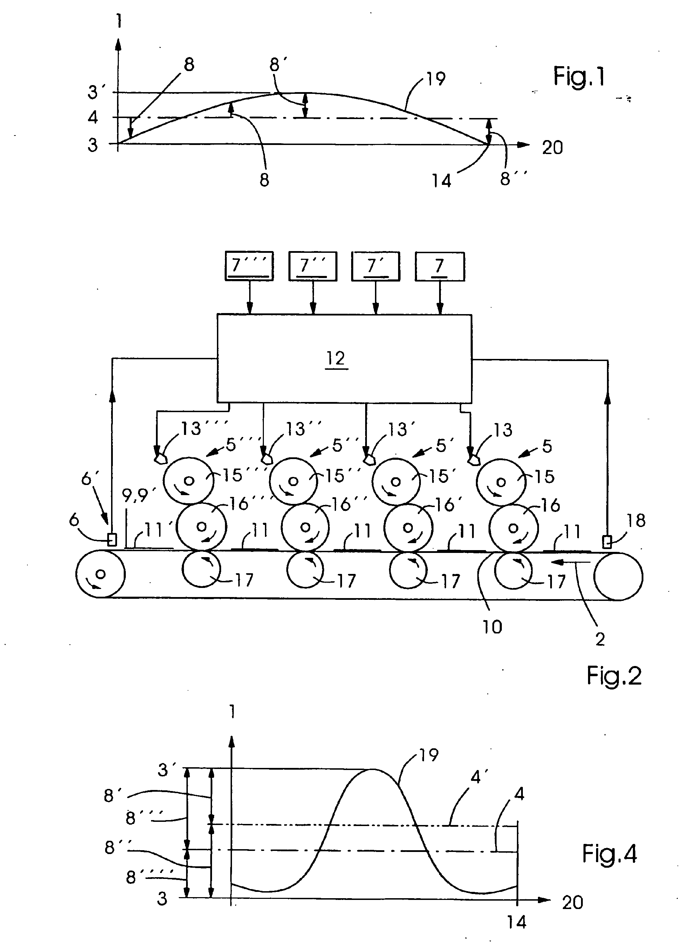

**Fig. 1** zeigt eine Prinzipdarstellung für die Bestimmung eines mittleren Werts 4 eines Registers 1. Dabei sind verschiedene Registerwerte 1 gegen die Richtung 20 quer zur Transportrichtung 2 aufgetragen, wobei Registerabweichungen 8, 8', 8", 8''', 8"", 8''''' sichtbar sind, die über den Verlauf der Papierbreite 14 auftreten.

Im dargestellten Ausführungsbeispiel beziehen sich die Registerabweichungen 8, 8', 8" zu dem mittleren Wert 4, sie können sich jedoch auch direkt auf das Register 19' eines anderen Farbdruckwerks 5, 5', 5", 5''' beziehen. Hier ist jedoch lediglich das Register 19 eines Farbdruckwerks 5, 5', 5" oder 5''' dargestellt. Der mittlere Wert 4 befindet sich hier in einem mittleren Bereich zwischen dem niedrigsten Wert 3 und dem höchsten Wert 3'.

**Fig. 2** zeigt die prinzipielle Ausgestaltung einer Druckmaschine. Die dargestellte Druckmaschine weist vier Farbdruckwerke 5, 5', 5", 5''' auf, wobei jedes dieser Farbdruckwerke 5, 5', 5", 5''' über einen Schreibkopf 13, 13', 13", 13''' verfügt, der jeweils einen Bildzylinder 15, 15', 15", 15''' mit einem elektrostatischen latenten Teilfarbenbild bebildert. Diese Teilfarbenbilder werden von den Bildzylindern 15, 15', 15", 15''' auf Bildübertragungszylinder 16, 16', 16", 16''' übertragen. Von dort aus gelangen sie auf die Drucksubstrate 11, 11', wobei Gegendruckzylinder 17 die Übertragungen durch ihre elektrische Ladung sowie mechanisch unterstützen. Dabei werden die Drucksubstrate 11, 11' von einem Träger 10 getragen, welcher als auf Rollen geführtes und mit einer Rolle angetriebenes Band ausgebildet ist.

Es ist ein Rechner 12 vorgesehen, der einerseits mit den Schreibköpfen 13, 13', 13", 13''' und andererseits mit einem Sensor 18 zur Substraterfassung sowie mit Meßstellen 6, 6' in Verbindung steht. Letztere können als quer zur Transportrichtung 2 angeordnete Sensoren 6, 6' zur Messung von Registermarken 9, 9' ausgebildet sein. Der Sensor 18 zur Substraterfassung gibt ein Signal an den Rechner 12, wenn ein Drucksubstrat 11, 11' der Maschine zugeführt wird. Danach steuert der Rechner 12 die Schreibköpfe 13, 13', 13", 13''' an, um diese zu einer Bebilderung der Bildzylinder 15, 15' 15", 15''' in einer Art und Weise zu veranlassen, daß die Teilfarbenbilder exakt registerhaltig auf die Drucksubstrate 11 gelangen. Die Sensoren 6, 6' messen mitgedruckte Registermarken 9, 9', wobei diese entweder zur Voreinstellung auf den Träger 10 direkt gedruckt werden können oder auf ein Substrat, das als Probesubstrat 11' dieser Messung dient. Die Registermarken 6, 6' können jedoch auch auf einen bildfreien Rand der Drucksubstrate 11 gedruckt werden. Die ersten Möglichkeiten dienen einer Voreinstellung, die letztere Möglichkeit einer Regulierung der Register während des Drucks. Dabei gibt es zwei Möglichkeiten, entweder müssen die Meßstellen 6,6 , viele Werte quer zur Transportrichtung 2 erfassen oder es werden nur zwei oder wenige Werte gemessen und diese werden gemeinsam mit Daten 7, 7', 7", 7''' über den Verlauf von Bildpunktzeilen der Schreibköpfe 13,13', 13", 13''' dahingehend ausgewertet, daß letztere eine registerhaltige Bebilderung der Bildzylinder 15, 15', 15", 15''' vornehmen.

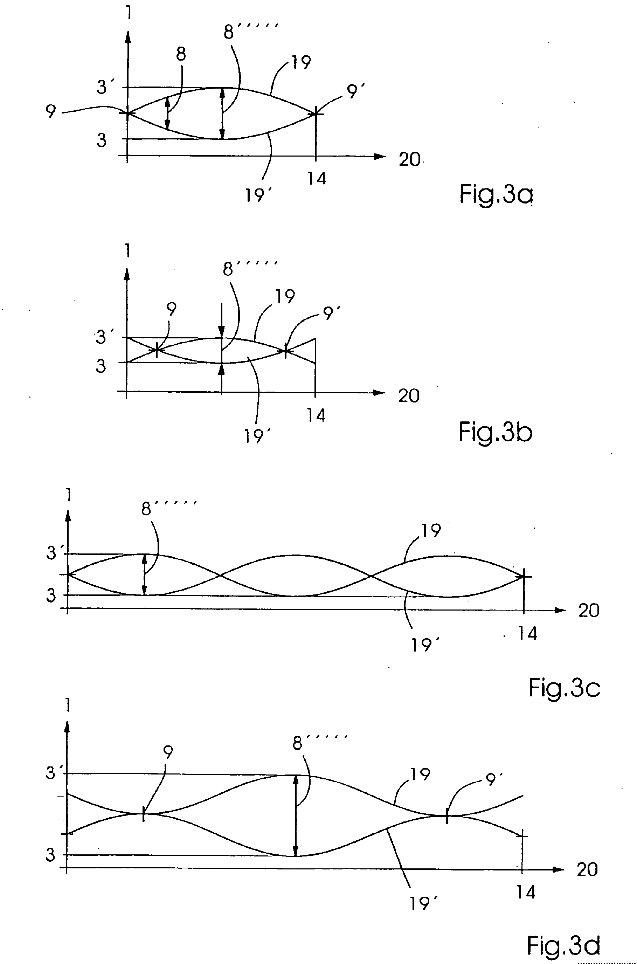

**Fig. 3a bis 3d** zeigt ein Verfahren nach dem Stand der Technik, mit dem - wie dies in Fig. 3a und 3b dargestellt ist - zwei gegensätzlich bogenförmig ausgebildete Registerabweichungen 19, 19' korrigiert werden sollen. Es geht darum, vor allem die maximale Registerabweichung 8''''' der Register 19, 19' zweier Farbdruckwerke 5, 5', 5", 5"'zu vermindern. Dies wird dadurch erreicht, daß die Registermarken 9, 9', wie in Fig. 3b dargestellt, näher zusammengerückt werden und dadurch die maximale Abweichung 8''''' erheblich vermindert wird. Dieses Verfahren ist jedoch abhängig von dem Verlauf der Register 19, 19' über die Papierbreite 14. Tritt eine wellenlinienförmige Form auf, wie dies in Fig. 3c dargestellt ist, so führt eine derartige Maßnahme nicht zur Verringerung der maximalen Abweichung 8''''', sondern sie führt dazu, daß der Fehler sogar noch erhöht wird. Dies ist in Fig. 3d dargestellt, wobei ersichtlich ist, daß das Zusammenrücken der Registermarken 9, 9' die maximale Abweichung 8''''' der beiden Register 19 und 19' erheblich vergrößert. Im Gegensatz dazu wird durch die erfindungsgemäße Maßnahme immer eine Verringerung der maximalen Abweichung 8''''' der Register 19, 19' erzielt. Die gegenseitige Relativlage der Register 19, 19' kann durch die Erfindung auch erheblich optimiert werden, um eine hohe Druckqualität zu erzielen.

Eine solche Optimierung zeigt **Fig. 4**, wobei verschiedene Arten der Bestimmung eines mittleren Wertes 4 oder 4' eines Registers 19 oder 19' dargestellt sind. Auch hier sind wieder die Registerwerte 1 gegen die Richtung 20 quer zur Transportrichtung 2 im Bereich der Papierbreite 14 aufgetragen. Wird aus den Werten dieser Register 19, 19' durch einfache Mittelwertbildung ein mittlerer Wert berechnet, so erreicht man den mittleren Wert 4. Bei diesem mittleren Wert 4 ist die maximale Abweichung 8"' zum höchsten Wert 3' wesentlich größer als die maximale Abweichung 8"" zum niedrigsten Wert 3, da die Mitte der Flächen gebildet wird. Dies führt dazu, daß die maximale Abweichung 8''' eine Größe hat, die im Bild sichtbar ist. Um dies zu verhindern, wird der mittlere Wert 4' mittels einer Gewichtung, beispielsweise einer quadratischen Gewichtung der Registerabweichungen 8 gebildet.

Die Registerabweichungen 8 können zu einer Bezugslinie, einem gedachten Sollwert oder zu einem anderen Druckwerk definiert werden. Letztlich führt die Berechnung eines mittleren Wertes 4 oder 4' dazu, daß die Registerabweichungen 8''''' eines Druckwerks von einem andren Druckwerk nicht mehr sichtbar sind - entscheidend ist also immer die Relativlage der Register 19 und 19'. Durch eine Gewichtung der Werte wird erreicht, daß die maximale Abweichung 8' vermindert wird und dadurch zwar eine Erhöhung der maximalen Abweichung 8" eintritt, diese jedoch innerhalb eines Bereiches liegt, der nicht sichtbar ist. Es ist in Fig. 4 zwar nur eine Kurve 19 dargestellt, jedoch ist ersichtlich, daß, wenn die gewichteten Mittelwerte 4' zweier Register 19 und 19' in Übereinstimmung gebracht werden, auch die maximalen gegenseitigen Abweichungen 8''''' gering gehalten sind. Dabei ist es möglich, daß die Gewichtung und die Berechnung an das gewünschte Ergebnis und an die gegebenen Umstände derart angepaßt werden, daß der Einfluß der Registerdifferenzen in optimaler Weise minimiert wird.

### Bezugszeichenliste

- 1: Registerwerte
- 2: Pfeil: Transportrichtung
- 3,3': Extremwerte des Registers
- 3: niedrigster Wert
- 3': höchster Wert
- 4, 4': mittlerer Wert des Registers
- 4': mittlerer Wert gewichtet
- 5, 5', 5", 5''': Farbdruckwerke
- 5: Referenzdruckwerk
- 6, 6': Meßstellen bzw. Sensoren zur Messung von Registerwerten
- 7, 7', 7", 7''': Daten über den Verlauf von Bildpunktzeilen
- 8, 8', 8'', 8''' 8'''', 8''''': Registerabweichungen
- 8', 8": maximale Abweichung eines Registers vom mittleren Wert 4
- 8''', 8'''': maximale Abweichung eines Registers von einem gewichteten mittleren Wert 4'
- 8''''': maximale Abweichung der Register zweier Farbdruckwerke
- 9, 9': Registermarken
- 10: Träger für Drucksubstrate
- 11, 11': Drucksubstrat / Probesubstrat
- 12: Rechner
- 13, 13', 13", 13''': Schreibköpfe
- 14: Papierbreite
- 15, 15', 15", 15''': Bildzylinder
- 16, 16', 16". 16''': Bildübertragungszylinder
- 17: Gegendruckzylinder
- 18: Sensor zur Substraterfassung
- 19: Register eines Farbdruckwerks
- 19': Register eines anderen Farbdruckwerks
- 20: Richtung quer zur Transportrichtung

## Patentansprüche

1. Verfahren zur Minimierung des Einflusses von Registerdifferenzen beim Mehrfarbendruck bei digitalen Druckverfahren, wobei Registerwerte (1) in Transportrichtung (2), die quer zu dieser Richtung unterschiedlich sind, auf einen zwischen den Extremen (3, 3') liegenden Wert eingestellt werden,
**dadurch gekennzeichnet,**
**dass** mehrere Einzelwerte der Registerwerte (1) erfasst werden, indem die Registerwerte (1) an mehreren Stellen quer zur Transportrichtung gemessen werden und aus diesen ein mittlerer Wert (4, 4') ermittelt wird, oder daß der Verlauf einer Bildpunktzeile erfasst und die Daten (6) abgespeichert werden, die Registerwerte (1) quer zur Transportrichtung (2) an mindestens einer Stelle (6, 6') gemessen werden und aus den Daten (7, 7', 7", 7''') und den Messungen der Verlauf der Bildpunktzeile ermittelt und ein mittlerer Wert (4,4') berechnet wird, und dass der so errechnete mittlere Wert mit dem mittleren Wert (4,4') mindestens eines weiteren Farbdruckwerks (5,5',5", 5'") in Übereinstimmung gebracht wird, indem die mittleren Werte (4, 4') aller Farbdruckwerke (5', 5", 5''') zu dem mittleren Wert (4, 4') eines Referenzdruckwerks (5) in Übereinstimmung gebracht werden.

2. Verfahren nach Anspruch 1,
**dadurch gekennzeichnet,**
**dass** zur Berechnung eines mittleren Wertes (4') die ermittelten Abweichungen (8, 8', 8", 8''', 8'''', 8''''') gewichtet werden.

3. Verfahren nach Anspruch 2,
**dadurch gekennzeichnet,**
**dass** eine quadratische Gewichtung erfolgt.

4. Verfahren Anspruch 1,
**dadurch gekennzeichnet,**
**dass** als mittlerer Wert (4, 4') die Mitte zwischen dem niedrigsten (3) und dem höchsten Wert (3') genommen wird.

5. Verfahren nach einem der Ansprüche 1 oder 4,
**dadurch gekennzeichnet,**
**dass** in die Bestimmung des mittleren Werts (4, 4') die niedrigsten (3) und höchsten Werte (3') nicht mit einbezogen werden.

6. Verfahren nach einem der Ansprüche 1 bis 5,
**dadurch gekennzeichnet,**
**dass** die Registerwerte (1) durch die Vermessung von Bildpunktzeilen ermittelt werden.

7. Verfahren nach einem der Ansprüche 1 bis 6,
**dadurch gekennzeichnet,**
**dass** die Registerwerte (1) durch die Messung mindestens zweier quer zur Transportrichtung beabstandet angeordneter Registermarken (9, 9') ermittelt werden.

8. Verfahren nach Anspruch 7,
**dadurch gekennzeichnet,**
**dass** die Registermarken (9, 9') auf einem Träger (10) für Drucksubstrate (11) gedruckt und danach wieder entfernt werden.

9. Verfahren nach Anspruch 8,
**dadurch gekennzeichnet,**
**dass** die Registermarken (9, 9') auf ein auf dem Träger (10) für Drucksubstrate (11) liegendes Substrat (11') gedruckt werden.

## Claims

1. Method for minimizing the influence of register differences in multi-color printing with the use of digital printing processes, wherein register values (1) are adjusted to a value between the extremes (3, 3') in the transport direction (2), said values being different transverse to said direction, ,
**characterized in that**
several individual values of the register values (1) are detected by measuring the register values (1) at several points transverse to the transport direction, said values being used to determine a mean value (4, 4'), or that the form of a line of image dots is detected and the data (6) are stored, the register values (1) are measured transversely to the transport direction (2), and the data (7, 7', 7", 7''') and the measurements of the form of the line of image dots are detected and a mean value (4, 4') is calculated, and that the thus calculated mean value is matched to the mean value (4, 4') of at least one additional color printing unit (5, 5', 5", 5''') by matching the mean values (4, 4') of all the color printing units (5', 5", 5''') to the mean value (4, 4") of a reference printing unit (5) in at least one point (6, 6').

2. Method as in claim 1,
**characterized in that**,
for calculating a mean value (4'), the detected deviations (8, 8', 8", 8"', 8"", 8""') are weighted.

3. Method as in Claim 2,
**characterized in that**
square weighting is used.

4. Method as in Claim 1,
**characterized in that**
the mean between the lowest value (3) and the highest value (3') is used as the mean value (4, 4').

5. Method as in one of Claims 1 or 4,
**characterized in that**
the lowest (3) and the highest values (3') are not included in the determination of the mean value (4, 4').

6. Method as in one of Claims 1 through 5,
**characterized in that**
the register values (1) are determined by measuring the lines of image dots.

7. Method as in one of Claims 1 through 6,
**characterized in that**
the register values (1) are determined by measuring at least two register marks (9, 9'), said register marks being arranged transversely to the transport direction and at a distance from each other.

8. Method in accordance with Claim 7,
**characterized in that**
the register marks (9, 9') are printed on a support (10) for printing substrates (11) and are afterwards removed from said support.

9. Method in accordance with Claim 8,
**characterized in that**
the register marks (9, 9') are printed on a substrate (11') positioned on the support (10) for the printing substrates (11).

## Revendications

1. Procédé de minimisation de l'effet des différences de registre lors de l'impression multicolore par des procédés d'impression numérique, selon lequel les valeurs de registre (1) définies dans le sens de transport (2) et différentes des valeurs définies dans le sens transversal par rapport au sens de transport sont réglées à une valeur située entre les extrêmes (3, 3'), **caractérisé en ce que** plusieurs valeurs de registre (1) individuelles sont enregistrées par les mesures des valeurs de registre (1) à plusieurs endroits dans le sens transversal par rapport au sens de transport et en calculant la valeur moyenne (4, 4') de ces valeurs ou par l'enregistrement d'une ligne de points d'image et par la mémorisation des données (6), par la mesure des valeurs de registre (1) dans le sens transversal par rapport au sens de transport (2) à au moins un endroit (6, 6') et par la définition de la courbe de la ligne de points d'image à partir des données (7, 7', 7", 7"') et des mesures et par le calcul d'une valeur moyenne (4, 4'), et **en ce que** la valeur moyenne calculée de cette manière est mise en concordance avec la valeur moyenne (4, 4') d'au moins un système complémentaire d'impression en couleurs (5, 5', 5", 5"') en mettant en concordance les valeurs moyennes (4, 4') de tous les systèmes d'impression en couleurs (5, 5', 5", 5"') avec la valeur moyenne (4, 4') d'un système d'impression de référence (5).

2. Procédé selon la revendication 1, **caractérisé en ce que** les déviations déterminées (8, 8', 8", 8"', 8"", 8""') sont pondérées pour le calcul d'une valeur moyenne (4').

3. Procédé selon la revendication 2, **caractérisé en ce qu'**une pondération quadratique a lieu.

4. Procédé selon la revendication 1, **caractérisé en ce que** la moyenne entre la valeur minimale (3) et la valeur maximale (3') est utilisée comme valeur moyenne (4, 4').

5. Procédé selon l'une quelconque des revendications 1 ou 4, **caractérisé en ce que** les valeurs minimales (3) et maximales (3') ne sont pas intégrées dans la définition de la valeur moyenne (4, 4').

6. Procédé selon l'une quelconque des revendications 1 à 5, **caractérisé en ce que** les valeurs de registre (1) sont définies par le mesurage des lignes de points d'image.

7. Procédé selon l'une quelconque des revendications 1 à 6, **caractérisé en ce que** les valeurs de registre (1) sont définies par les mesures d'au moins deux traits de repérage (9, 9') disposés à une certaine distance entre eux et transversalement à la direction de transport.

8. Procédé selon la revendication 7, **caractérisé en ce que** les traits de repérage (9, 9') sont imprimés sur un support (10) de substrats d'impression (11) et enlevés à nouveau par la suite.

9. Procédé selon la revendication 8, **caractérisé en ce que** les traits de repérage (9, 9') sont imprimés sur un substrat (11') déposé sur le support (10) pour substrats à imprimer (11).
